# EUROPEAN PATENT APPLICATION

(11) **EP 2 945 089 A1**
(43) Date of publication of application: **18.11.2015**
(21) Application number: 15167082.5
(22) Date of filing: 11.05.2015
(51) Int. Cl.: G06F 21/10, G06F 21/12

(54) **REUSABLE LICENSE ACTIVATION KEY**

(30) Priority: 16.05.2014 US 201461994395 P
(71) Applicant: Solarwinds Worldwide, LLC, Austin, TX 78735 (US)
(72) Inventor: Cooper, Peter, Ottawa, K1V 2K3 (CA); Vlcek, Tomas, 77990 Olomouc (CZ); Tomek, Jiri, 639 00 Brno (CZ)
(74) Representative: TBK

(57) **Abstract**

Systems, methods, apparatuses, and computer program products for a reusable license activation key are provided. One method includes creating, by a server, a registration record in a database upon activation of a license for a product, the registration record comprising an activation key for the license. The method may further include generating a new registration record comprising a new activation key when a change to the license occurs, generating a globally unique identifier for linking the registration record with the new registration record, and storing the linked registration records in the database.

## Description

### CROSS-REFERENCE TO RELATED APPLICATIONS:

This application claims priority from United States provisional application no. 61/994,395 filed on May 16, 2014. The contents of this earlier filed application are hereby incorporated in its entirety.

### BACKGROUND:

### Field:

Certain embodiments of the invention generally relate to software licensing systems and methods. In particular, some embodiments may relate to activating or re-activating licenses, features, or upgrades.

### Description of the Related Art:

A software license generally refers to a legal instrument that governs the use and distribution of computer software products or programs. Typically, a software license grants a user the right to use copies of a copyrighted software product. The software license may also explain the terms of use and may set forth restrictions to the granted right to use the software. Some common forms of licenses include "shrink wrap" licenses, "online" licenses, and "site" licenses.

A "shrink wrap" license is a license that accompanies a physical software product that is sold individually in a package. Usually, this type of software is provided on a disk or some other type of physical medium. The term "shrink wrap" is used because this type of software is sold in a shrink wrapped package, and the user is assumed to have accepted the terms of the shrink wrap license upon breaking the seal of the package that holds the disk.

An "online" license refers to a license that accompanies software products that are downloaded from the Internet. This license is typically presented to the user prior to downloading the software, and provides the user with an option to accept or reject the license. If the user clicks the button to accept the license, then the user has accepted the terms of the license and the user is granted access to the software program.

A "site" license refers to a single license that allows for the installation of multiple copies of the same software on multiple machines at one or more of the purchaser's sites. This type of license is can be used to provide software to companies or other organizations that have numerous computers. The purchaser pays for a certain number of copies, and the site license allows the purchaser to install that number of copies on its computers.

In addition, there are a number of types of licenses, such as evaluation and commercial, and types of licensing models.

### SUMMARY:

One embodiment is directed to a method including creating, by a server, a registration record in a database upon activation of a license for a product. The registration record includes an activation key for the license. The method may further include generating a new registration record comprising a new activation key when a change to the license occurs, generating a globally unique identifier for linking the registration record with the new registration record, and storing the linked registration records in the database.

Another embodiment is directed to an apparatus including at least one processor and at least one memory including computer program code. The at least one memory and computer program code are configured, with the at least one processor, to cause the apparatus at least to create a registration record comprising an activation key for the license in a database upon activation of a license for a product, generate a new registration record comprising a new activation key when a change to the license occurs, generate a globally unique identifier for linking the registration record with the new registration record, and store the linked registration records in the database.

Another embodiment is directed to a computer program embodied on a non-transitory computer readable medium. The computer program is configured to control a processor to perform a process including creating a registration record in a database upon activation of a license for a product. The registration record includes an activation key for the license. The process may further include generating a new registration record comprising a new activation key when a change to the license occurs, generating a globally unique identifier for linking the registration record with the new registration record, and storing the linked registration records in the database.

### BRIEF DESCRIPTION OF THE DRAWINGS:

For proper understanding of the invention, reference should be made to the accompanying drawings, wherein:
Fig. 1 illustrates a system, according to one embodiment of the invention;
Fig. 2 illustrates a block diagram of a state machine diagram, according to an embodiment;
Fig. 3 illustrates an example of a state diagram for the licensing store, according to one embodiment;
Fig. 4 illustrates a flow diagram for linking the decommissioned license with the new license record, according to one embodiment;
Fig. 5 illustrates a block diagram of an apparatus, according to one embodiment; and
Fig. 6 illustrates a flow diagram of a method, according to one embodiment.

### DETAILED DESCRIPTION:

It will be readily understood that the components of the invention, as generally described and illustrated in the figures herein, may be arranged and designed in a wide variety of different configurations. Thus, the following detailed description of the embodiments of systems, methods, apparatuses, and computer program products for a reusable license activation key, as represented in the attached figures, is not intended to limit the scope of the invention, but is merely representative of selected embodiments of the invention.

If desired, the different functions discussed below may be performed in a different order and/or concurrently with each other. Furthermore, if desired, one or more of the described functions may be optional or may be combined. As such, the following description should be considered as merely illustrative of the principles, teachings and embodiments of this invention, and not in limitation thereof.

When a user or customer buys a specific software product, a purchase registration record is created in a database and the user is given an activation key for that product. If a user later purchases a maintenance renewal or product upgrade, finance constraints may require the creation of a new purchase registration record with new activation keys for these actions.

As will be discussed in detail below, embodiments provide a reusable activation key feature which allows users to still use the original activation key even if it is not related to a current state of their purchase. To achieve this feature, related registration records are linked together by a unique identifier. Whenever a user enters the original activation key and proceeds with product activation, a licensing server searches the linked registration records for this activation key and selects the corresponding current activation key for activation.

As mentioned above, there are a number of types of licenses and types of licensing models. For example, the types of licenses may include evaluation licenses, commercial licenses, temporary licenses, volume licenses, and free licenses. An evaluation license provides customers with a temporary license for a testing period; they can be valid for a limited number of days (e.g., 30 days) and once the evaluation period expires, the license would need to be converted into a commercial, temporary or extension license or the product will stop working.

A commercial license is defined as being perpetual in term and therefore can be used any time without expiration. Its usage is limited by a maintenance period that defines for which product versions it can be used. In other words, the commercial license can be used only with the product released before the end of the last maintenance period.

In contrast, a temporary license has a limited time frame and is used for special purposes, such as migration and update scenarios, etc. A free license may be valid for any predefined time period and provides a free version of a product, which may develop into a commercial version.

A volume license refers to a special type of license bundled with the product release. This license is bound to a specific product version and customer, and is used to install the product on any number of computers. The volume license does not expire, but a new version of a product will need a new volume license.

In addition to the above license types, there are several licensing models. For example, these may include single activation, multi activation, and seat based models. The single activation model refers to licenses that can be activated on a single computer only. The multi activation model refers to a license that can be activated on multiple computers. The licensing server can keep track of activated licenses and prevents activation on more than the allowed number of computers. A seat based model refers to a license that contains a defined number of "seats." Seats can be activated all on a single computer or they can be distributed over multiple computers as needed.

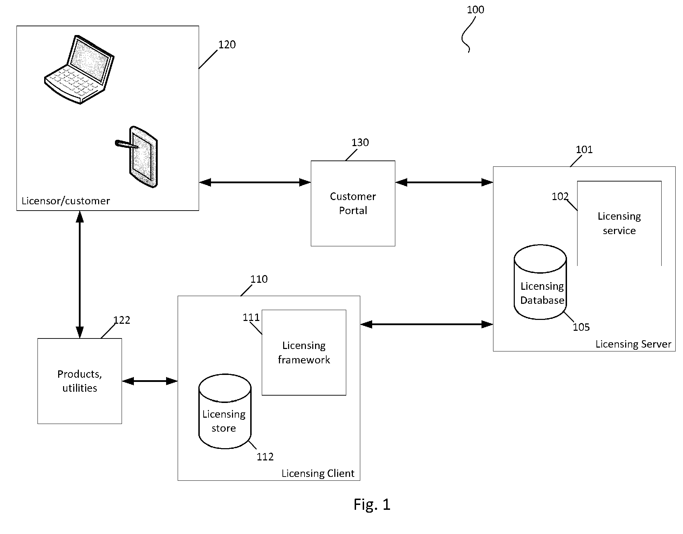

According to an embodiment, as illustrated in Fig. 1, a licensing system 100 is configured to provide a set of services to enable a user or software product to activate, maintain, and deactivate licenses. Licensing system 100 may comprise several dedicated parts connected to form a network to enable license processing. Licensing system 100 may be configured to handle many types of licenses and licensing models created to cover most, if not all, licensing scenarios. Licenses of any type and model have a set of attributes named features that are used by the product to recognize its required behavior.

According to certain embodiments, licensing system 100 may include a licensing server 101, licensing client 110, product licensor 120 (e.g., customer), and a set of tools and utilities 122. Licensing server 101 may include a licensing service 102 and licensing database 105. Licensing service 102 may store information on customer's licenses, provide a set of services related to licenses, such as creation, activation, deactivation, synchronization, license maintenance, etc. Licensing server 101 may be accessed from the internet, for example via a licensing framework 111 or via a customer portal website or application 130, or internally by sales and support via a business management software (e.g., Netsuite™).

Licensing client 110 may include a licensing framework 111 and licensing store 112. Licensing framework 111 is a software package configured to manage licenses in licensing store 112 and communication with licensing server 101. A license can hold an unlimited set of attributes named features. Each feature may have a name and numeric value, and can be used by the product or licensing system 100 to find out what that specific license allows or disallows, how many elements are licensed, etc.

Licensing store 112 includes one or more files that contain encrypted records (e.g., licenses) located on the customer's computer. The licenses (represented by the encrypted records) are managed by licensing framework 111, which works upon licensing store 112 and communicates with licensing server 101.

In one embodiment, licensing store 112 may include one or more locally stored encrypted file(s) in XML format, for example. These file(s) may contain license records encoded as Base64 text and some extra information (e.g., UMID for the license record, type of license, date of creation and last access, etc.). According to an embodiment, the license records in the licensing store 112 can be automatically synchronized with the licensing server 101. This synchronization may occur, for example, periodically once per 24 hours or it can be performed on demand. In an embodiment, synchronization compares licenses in licensing store 112 with licenses available on the licensing server 101. If there are any updates available they are downloaded, and local licenses in the licensing store 112 are updated.

Product licensor 120 includes a dedicated software module included in a licensed product to check license validity and may perform operations, such as license activation, synchronization, etc. In an embodiment, licensing system 100 may also include tools and utilities 122, which include a set of dedicated software modules used for license related tasks, such as license management, maintenance checking, license store maintenance, etc.

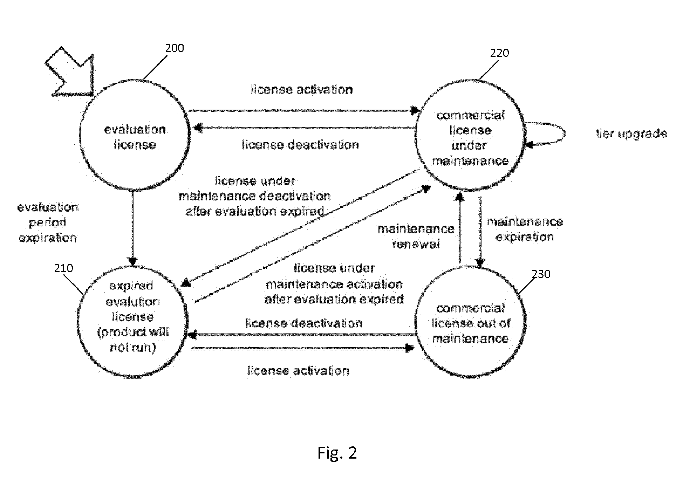

A license lifecycle may be defined as a state machine, as illustrated in Fig. 2. According to an embodiment, an empty licensing store is created if no existing licensing store is found. Then, specific folders in a computer are scanned for license files (*.lic) and newly found licenses are imported to the licensing store.

After the automated import, evaluation licenses 200 are now stored in the licensing store. A unique machine ID (UMID) may be generated for the license and the UMID is sent during activation together with license information to the licensing server. The UMID may be a Base64 encoded sequence of bytes that uniquely identifies a particular machine and license on that machine. The UMID can have an extension separated by character ":" that contains additional information about the product version, RTM date, etc. UMID can be generated for each machine and license on that machine. The UMID can be used for both online and offline activation.

Referring again to Fig. 2, if the license can be activated, the licensing server creates a commercial license under maintenance 220 and sends it back to the user. The commercial license 220 is imported into the licensing store. Subsequently, the maintenance period may expire resulting in the commercial license under maintenance 220 to convert into a commercial license out of maintenance 230.

If the evaluation period expires and the evaluation license 200 is not activated, the evaluation license 200 becomes an expired evaluation license 210 and the product cannot be run.

The activated commercial license 220 can be deactivated, which means that the license is removed from the licensing store and is marked as deactivated on the licensing server. This allows the license to be activated again (e.g., after migration, upgrade, maintenance, etc.). In addition, activated licenses can be upgraded. For instance, the number of seats can be increased, e.g., if the license is originally approved for 10 computers, it can be upgraded to 20 computers, etc.

Returning to Fig. 1, in an embodiment, licensing system 100 may be configured to look for all evaluation licenses installed with product as *.lic files and imports these licenses into the licensing store 112 during first initialization. These evaluation licenses provide a starting point for activation of a commercial license, as discussed above in connection with Fig. 2. Activation of a commercial license may be performed manually, while subsequent changes to the commercial license may occur automatically in the background, for example once per 24 hours. With respect to seat based licenses, it is possible to upgrade the license (number of seats) upon activation of the commercial license.

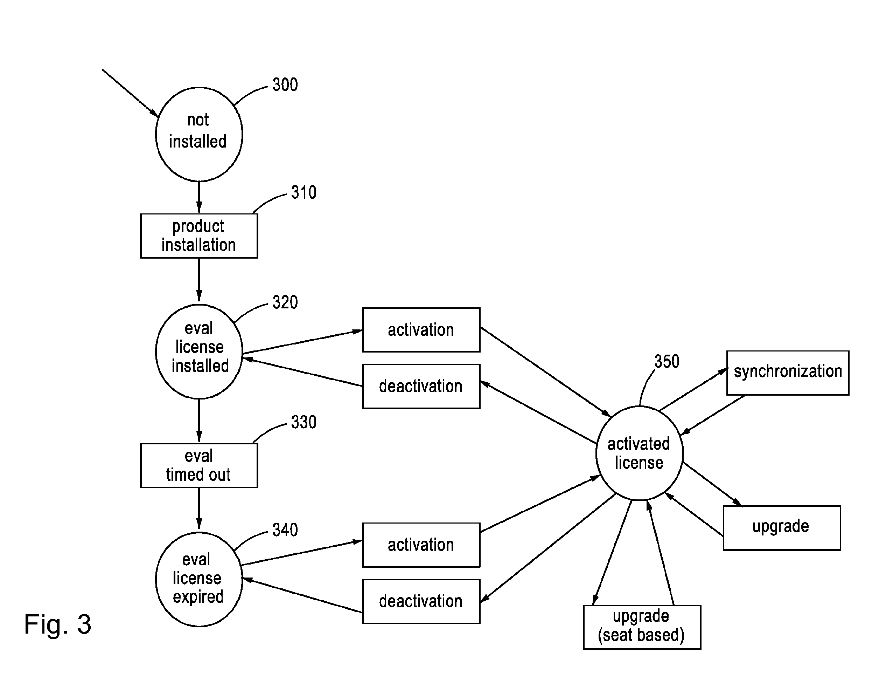

Fig. 3 illustrates an example of a state diagram for the licensing store, according to one embodiment. Initially, at 300, the license is not installed. At 310, product installation occurs in which the product is deployed on a target machine and any evaluation license shipped with the product is imported into the licensing store. At 320, an evaluation license is installed. At 330, the evaluation may time out when the product is in trial mode and the customer has used the product longer than the evaluation license's lifetime (days from the product installation). As a result, at 340, the license expires and becomes invalid such that the product stops working. When this happens, the customer will need to activate a commercial license to make product working again.

At 350, once a commercial license is purchased, the product can be activated, which includes registration of a machine id on the licensing server. The evaluation license is then upgraded to commercial and the product can run indefinitely.

According to an embodiment, if the product is moved onto a new computer (e.g., server migration, etc.), the license record is deactivated. The product cannot run anymore on the original computer after deactivation, but the license can be activated on the new computer.

With respect to synchronization, if a customer changes the license status (e.g., upgrade, maintenance renewal, seat upgrade), those changes may be applied automatically in the background (e.g., once per 24 hours) or manually by the customer at any time. In certain embodiments, tier upgrade, version upgrade or maintenance renewal can be performed automatically or manually. Once the license record is updated in the licensing store, the customer has access to all features defined by the new (upgraded) license. Another type of upgrade is a seat based upgrade, which (re)allocates number of activated license seats over the computers.

It should be noted that, in some embodiments, data transfers between the licensing server and licensing store may be realized by licensing framework modules over web services, for example. In an embodiment, an encrypted extension of the Simple Object Access Protocol (SOAP) (REF1-Web Services Enhancements Architecture) may be used for communication with the licensing proxy over the Internet. Web services can activate and deactivate licenses, check license status, update customer information and can be called by product (either automatically or from an interface by user), customer (via customer portal), or support person (e.g., via Netsuite™).

Depending upon the licensing model, embodiments may provide several subsequent data models based upon set of database tables, which may be stored in the licensing server. In an embodiment, the following tables may be used:
- Registrations (license record, license master record for multi activation model)
- Registrations Multiactivations (only for multiactivation),
- Applications (defines application licensing model, template used, etc.),
- TemplateLicenses (defines license properties, references table features),
- TemplateLicenses Xref (references table templateLicenses, used for 1:n relationships between applications and license template)
- Subscriptions (holds info on license maintenance)
- Features (holds set of features related to the license)

Once a license is created (i.e., license key is generated and related record is created by licensing server) it can be activated and deactivated, as discussed above. The created license has a fixed set of parameters that cannot be changed. Any changes to the license, such as upgrade or downgrade, are done by decommissioning of the old license record and the creation of a new record.

When a license is marked as decommissioned, the "paid" column of the "registration" table is changed from YES to REPLACED or UPGRADED, and it is not possible to activate/deactivate that license anymore. When the customer makes a change to the license (e.g., upgrade or downgrade), the license is marked as decommissioned and a new license record (with the parameters required by customer) having a new activation key is created to replace the decommissioned record.

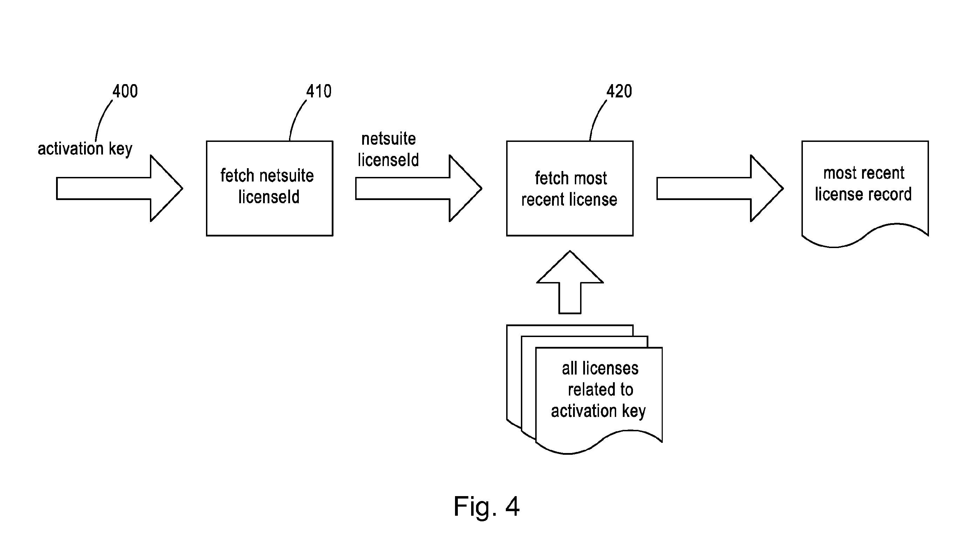

Fig. 4 illustrates a flow diagram for linking the decommissioned license with the new license record, according to one embodiment. As mentioned above, in one embodiment, this new record is bound to the decommissioned one by a LicenseGroupId and/or NetSuiteLicenseId column, for example. This mechanism allows the customer, at 400, to identify the license by the first-ever activation key provided (i.e., the old license key that was created before the license was decommissioned). At 410, the licensing server fetches the licenseID associated with the received activation key. Then, at 420, the licensing server is able to locate the most recent license from all in the group and work with it internally as if the customer provided its activation key.

The single activation license model works mostly upon tables "applications" and "registrations." A license record can be in states of ready-to-be-activated (blank license) or activated. As mentioned above, a license record is identified by the activation key which may be GUID based. An upgrade to the license may be performed by creating new license record (new record in table registrations) which is bound by value of column NetsuiteLicenseId/LicenseGroupId. A license can be upgraded or downgraded for license parameters (tier) or product major version (only upgrade).

In certain embodiments, the following operations may occur:
- License creation - upon data from license template (table TemplateLicense) a new license record is created in "registrations" table. During processing a new license key is written into record (registrations.activationKey) and column "paid" is set to value YES, column "used" is set to value 0.
- License activation - the record (with correct activationKey) in the table "registrations" is marked as activated column used is set to value 1
- License decommissioning - Occurs if deactivation is performed. Column "Paid" in "Registrations" table is set to REPLACED and new blank license (with new activation key, but bound to the old activation key by NetsuiteLicenseId value) is created as described above.
- Tier upgrade - new blank license is created upon a different license template with different tier.
- Version upgrade - new blank license is created upon a different license template with different major product version.
- Maintenance upgrade - maintenance is renewed for next time period (table subscriptions).

The following tables show the sequence of initialization-activation-deactivation operations. Changed values, or records added are *italicized*. In the initial state, there exists one record with activation key and it has assigned a license id value (column NetsuiteLicenseID) used for linking with all related records, and the value of column "used" is set to 0.

**Table Registrations**

| **RegID** | **CustomerID** | **AppKey** | **PurchaseDate** | **RegDate** | **Price** |
|---|---|---|---|---|---|
| 2250206 | SW21926479 | 6177 | 41646 | NULL | NULL |

| **ComputerName** | **Volume** | **Name** | **Invoice** | **Paid** | **Used** |
|---|---|---|---|---|---|
| NULL | NULL | NULL | 10157515 | YES | 0 |

| **EMail** | **Phone** | **KeyType** | **SerialNumber** | **Key** | **IP** |
|---|---|---|---|---|---|
| NULL | NULL | GEN3 | NULL | NULL | NULL |

| **Company** | **Owner** | **Logon** | **Windows** | **ServicePac k** | **WinVer** |
|---|---|---|---|---|---|
| NULL | NULL | NULL | NULL | NULL | NULL |

| **VolumeLabel** | **Release** | **Distributor** | **MACAddress** | **AppID** | **Latest** |
|---|---|---|---|---|---|
| NULL | NULL | NULL | NULL | 11237 | NULL |

| **NetSuiteLicensel D** | **LastUpdateBy** | **LastUpdateDat e** | **ActivationKe y** | **LicenseBlo b** | **ShowRC** |
|---|---|---|---|---|---|
| 1215303 | LicenseCreationIntegratio n | 1/7/2014 9:39:41 AM | 736E-C010-76F1-4750-9A65-A7FC-F260-0EB0 | NULL | FALSE |

| **ActivationCount** | **LicenseGroupId** | **LicenseUnitSize** | **LicenseSize** | **BundleID** | **MaxInstallationCount** |
|---|---|---|---|---|---|
| NULL | 1215303 | 250 | NULL | NULL | NULL |

| **MachineID** | **RowVersion** | **LicenseNotes** | **BaseAppID** | | |
|---|---|---|---|---|---|
| NULL | | NULL | NULL | | |

The maintenance record contains related information for license maintenance. It is linked to the "registrations" table by value of column "NetsuteLicense".

**Table Subscriptions**

| **SubID** | **CustomerID** | **OrderDate** | **ExpireDate** | **Type** | **Active** |
|---|---|---|---|---|---|
| 1162864 | SW21926479 | 41646 | 42011 | Network Performance Monitor SL250 | Y |

| **LastCD** | **EmailFlag** | **Sent** | **Invoice** | **AppID** | **Renewal** |
|---|---|---|---|---|---|
| NULL | 0 | NULL | NULL | 124 | NULL |

| **StartDate** | **TaxableMaint** | **DeferredMaint** | **DeferredComplete** | **MaintRenew** | **Upgraded** |
|---|---|---|---|---|---|
| 41646 | NULL | NULL | N | FALSE | FALSE |

| **UpgradeDate** | **Upgradelnvoice** | **LicenseID** | **NetsuiteLicense** | **NetsuiteMaintID** | **ProductCategory** |
|---|---|---|---|---|---|
| NULL | NULL | NULL | 1215303 | NULL | Orion |

| **RowVersion** | | | | | |
|---|---|---|---|---|---|
| | | | | | |

After activation value of column "Used" is set to 1, there are set content columns, License blob's value is set up.

**Table Registrations**

| **RegID** | **CustomerID** | **AppKey** | **PurchaseDate** | **RegDate** | **Price** |
|---|---|---|---|---|---|
| 2250206 | SW21926479 | 6177 | 41646 | *1*/*7*/*2014* | NULL |

| **ComputerName** | **Volume** | **Name** | **Invoice** | **Paid** | **Used** |
|---|---|---|---|---|---|
| *QA-BRN-VTOM-04* | NULL | | 10157515 | YES | *1* |

| **EMail** | **Phone** | **KeyType** | **SerialNumber** | **Key** | **IP** |
|---|---|---|---|---|---|
| aa@bb.cc | | GEN3 | NULL | NULL | NULL |

| **Company** | **Owner** | **Logon** | **Windows** | **ServicePack** | **WinVer** |
|---|---|---|---|---|---|
| NULL | *Windows User* | *Administrator* | NULL | NULL | NULL |

| **VolumeLabel** | **Release** | **Distributor** | **MACAddress** | **AppID** | **Latest** |
|---|---|---|---|---|---|
| NULL | NULL | NULL | NULL | 1237 | NULL |

| **NetSuiteLicenseID** | **LastUpdateBy** | **LastUpdateDat e** | **ActivationKey** | **LicenseBlob** | **ShowRC** |
|---|---|---|---|---|---|
| 1215303 | LicenseCreation Integration | 1/7/2014 9:39:41 AM | 736E-C010-76F1-4750-9A65-A7FC-F260-0EB0 | *AgQDTl....BSJ0* | FALSE |

| **ActivationCount** | **LicenseGroupId** | **LicenseUnitSize** | **LicenseSize** | **BundleID** | **MaxInstal-lationCount** |
|---|---|---|---|---|---|
| NULL | 1215303 | 250 | NULL | NULL | NULL |

| **MachineID** | **RowVersion** | **LicenseNotes** | **BaseAppID** | | |
|---|---|---|---|---|---|
| *ArV1 WGZz.....JBXpKA* C | | NULL | *1237* | | |

**Table Subscriptions**

| **SubID** | **CustomerID** | **OrderDate** | **ExpireDate** | **Type** | **Active** |
|---|---|---|---|---|---|
| 1162864 | SW21926479 | 41646 | 42011 | Network Performance Monitor SL250 | Y |

| **LastCD** | **EmailFlag** | **Sent** | **Invoice** | **AppID** | **Renewal** |
|---|---|---|---|---|---|
| NULL | 0 | NULL | NULL | 124 | NULL |

| **StartDate** | **TaxableMaint** | **DeferredMaint** | **Deferred Complete** | **MaintRenew** | **Upgraded** |
|---|---|---|---|---|---|
| 41646 | NULL | NULL | N | FALSE | FALSE |

| **Upgrade Date** | **Upgrade Invoice** | **LicenseID** | **NetsuiteLicense** | **NetsuiteMaintID** | **Product Category** |
|---|---|---|---|---|---|
| NULL | NULL | NULL | 1215303 | NULL | Orion |
| **Row Version** | | | | | |

After deactivation, the previous record is marked as replaced (Paid=REPLACE) and a new one is added with a different activation key value. While a new activation customer can use the first activation key because these records are linked by NetsuiteLicenseID value, according to an embodiment.

In an embodiment, the customer can use any of the activation keys, and the licensing server may locate the appropriate activation key at any time (Paid=YES, used=0) by Netsuite License ID, for example.

**Table Subscriptions**

| **RegID** | **CustomerID** | **AppKey** | **PurchaseDate** | **RegDate** | **Price** |
|---|---|---|---|---|---|
| 2250206 | SW21926479 | 6177 | 41646 | 1/7/2014 | NULL |
| *2250207* | *SW21926479* | *6177* | *41646* | *NULL* | *NULL* |

| **ComputerName** | **Volume** | **Name** | **Invoice** | **Paid** | **Used** |
|---|---|---|---|---|---|
| QA-BRN-VTOM-0₄ | NULL | | 10157515 | REPLACE | 1 |
| *NULL* | *NULL* | *NULL* | *10157515* | *YES* | *0* |

| **EMail** | **Phone** | **KeyType** | **SerialNumber** | **Key** | **IP** |
|---|---|---|---|---|---|
| aa@bb.cc | | GEN3 | NULL | NULL | NULL |
| *NULL* | *NULL* | *GEN3* | *NULL* | *NULL* | *NULL* |

| **Company** | **Owner** | **Logon** | **Windows** | **ServicePack** | **WinVer** |
|---|---|---|---|---|---|
| NULL | Windows User | Administrator | NULL | NULL | NULL |
| *NULL* | *NULL* | *NULL* | *NULL* | *NULL* | *NULL* |

| **VolumeLabel** | **Release** | **Distributor** | **MACAddress** | **AppID** | **Latest** |
|---|---|---|---|---|---|
| NULL | NULL | NULL | NULL | 1237 | NULL |
| *NULL* | *NULL* | *NULL* | *NULL* | *1237* | *NULL* |

| **NetSuiteLicenseID** | **LastUpdateBy** | **LastUpdateDat e** | **ActivationKe y** | **LicenseBlob** | **ShowRC** |
|---|---|---|---|---|---|
| *1215303* | LicenseCreation Integration | 1/7/2014 9:39:41 AM | 736E-C010-76F1-4750-9A65-A7FC-F260-0EB0 | AgQDTl1NAj.....QyNj X11BSJ0= | FALSE |
| *1215303* | *LicenseCreation Integration* | *1*/*7*/*2014 9:49:37 AM* | *5F80-3936-54EE-44A4-BCE3*-*4763-E859-0F4B* | *NULL* | *FALSE* |

| **ActivationCount** | **LicenseGroupId** | **LicenseUnitSize** | **LicenseSize** | **BundleID** | **MaxInstallation Count** |
|---|---|---|---|---|---|
| NULL | 11215303 | 250 | NULL | NULL | NULL |
| *NULL* | *1215303* | *250* | *NULL* | *NULL* | *NULL* |

| **MachineID** | **RowVersion** | **LicenseNotes** | **BaseAppID** | | |
|---|---|---|---|---|---|
| **ArV1WGZ....k0JBXpKA** C | | NULL | 1237 | | |
| *NULL* | | *NULL* | *NULL* | | |

| **SubID** | **CustomerID** | **Order Date** | **ExpireDate** | **Type** | **Active** |
|---|---|---|---|---|---|
| 1162864 | SW21926479 | 41646 | 42011 | Network Performance Monitor SL250 | Y |

| **LastCD** | **EmailFlag** | **Sent** | **Invoice** | **AppID** | **Renewal** |
|---|---|---|---|---|---|
| NULL | 0 | NULL | NULL | 124 | NULL |

| **StartDate** | **Taxable Maint** | **Deferred Maint** | **Deferred Complete** | **MaintRenew** | **Upgraded** |
|---|---|---|---|---|---|
| 41646 | NULL | NULL | N | FALSE | FALSE |

| **Upgrade Date** | **Upgrade Invoice** | **LicenseID** | **Netsuite License** | **NetsuiteMaintID** | **ProductCategory** |
|---|---|---|---|---|---|
| NULL | NULL | NULL | 1215303 | NULL | Orion |
| **Row Version** | | | | | |

The multi-activation license model works mostly with tables "Applications", "Registrations" and "Registrations_multiactivations." A license record can be in states ready-to-be-activated (blank license) or activated to x of n licenses. Again, the record may be identified by an activation key (e.g., GUID based). The upgrade mechanism is the same as described above for the single activation model. However, to allow the license to be used on more than one computer, there is an added "Registrations_multiactivations" table that holds computer-specific information. Shared information is still in the "registrations" table. During activation of the license, a new record is created in "Registrations_MultiActivations" table and "Registrations" table record is updated with the correct activation count value. Since each computer has a unique machine ID, for any single computer there is always present a record related to the activation key and machine id. Table "registrations" may store information on how many licenses total are available and how many are in use. These counters are incremented/decremented during activation/deactivation. If license limit is reached, it is not possible to activate new licenses.

In certain embodiments, the following operations may occur:
- Master license creation - A new record is created in table "Registrations" from data related to license template.
- License activation, license x activation - Machine id (from umid) related record is created in the "Registrations_multiactivations" (column IsActivation=1) table for the activation key and counter is modified in the Registration table (ActivationCount column is incremented). If ActivationCount column's value is equal to value of column MaxInstallationCount, then all licenses are exhausted and activation fails.
- License x deactivation - Machine id related record in Registrations_multiactivations table of activation key is closed by creation of new record in the same table (IsActivation=0). Value of column ActivationCount of master record in table Registrations is modified (decremented).
- License decommissioning - same as above discussed for single activation model.
- Version upgrade - same as above discussed for single activation model.
- Maintenance upgrade - same as above discussed for single activation model.

The Seat based model extends the multi-activation model with a new mechanism in which one computer can have more than 1 license seat activated for a single license. This is important for certain server products to be able to cover number of clients connected to the server. In this model, the counter ActivationCount in the table "registrations" contains the total number of seats available for the license and this counter is incremented/decremented during activations/deactivations in similar way as for multi-activation licenses.

As mentioned above, multi-activation licensing use an extra table - Registrations_multiactivations - which is related to single instance of installation and is linked to master record in table "Registrations". These records are addressed by machineID used, or if not found then a new one is created.

When in initial state, master record does exist in the table similarly like in the Single activation model.

**Table Registrations**

| **RegID** | **CustomerID** | **AppKey** | **PurchaseDate** | **RegDate** | **Price** |
|---|---|---|---|---|---|
| 2250208 | SW21926486 | 12545 | 41646 | NULL | NULL |
| **Computer Name** | **Volume** | **Name** | **Invoice** | **Paid** | **Used** |
| NULL | NULL | NULL | 10157516 | YES | 0 |
| **EMail** | **Phone** | **KeyType** | **SerialNumber** | **Key** | **IP** |
| NULL | NULL | GEN3 | NULL | NULL | NULL |
| **Company** | **Owner** | **Logon** | **Windows** | **Service Pack** | **WinVer** |
| NULL | NULL | NULL | NULL | NULL | NULL |
| **VolumeLabel** | **Release** | **Distributor** | **MACAddress** | **AppID** | **Latest** |
| NULL | NULL | NULL | NULL | 12069 | NULL |
| **NetSuite LicenseID** | **Last UpdateBy** | **Last UpdateDate** | **ActivationKey** | **License Blob** | **ShowRC** |
| 1215304 | License Creation Integration | 1/7/2014 9:49:44 AM | 222D-B3E4-3A55-4951-8E41-75F4-4F50-AC0F | NULL | FALSE |
| **Activation Count** | **License GroupId** | **License UnitSize** | **LicenseSize** | **BundleID** | **MaxInstallation Count** |
| NULL | 1215304 | 4 | NULL | NULL | 12 |
| **MachineID** | **RowVersion** | **LicenseNotes** | **BaseAppID** | | |
| NULL | | NULL | NULL | | |

Maintenance information is treated the same way as for single activation model.

**Table Subscriptions**

| **SubID** | **CustomerID** | **OrderDate** | **ExpireDate** | **Type** | **Active** |
|---|---|---|---|---|---|
| 1162865 | SW2192648 6 | 41646 | 42011 | DameWare Remote Support Per Seat License (4 to 5 user price) | Y |
| **LastCD** | **EmailFlag** | **Sent** | **Invoice** | **AppID** | **Renewal** |
| NULL | 0 | NULL | NULL | 12081 | NULL |
| **StartDate** | **Taxable Maint** | **Deferred Maint** | **Deferred Complete** | **MaintRenew** | **Upgraded** |
| 41646 | NULL | NULL | N | FALSE | FALSE |
| **Upgrade Date** | **Upgrade Invoice** | **LicenseID** | **Netsuite License** | **NetsuiteMaintID** | **Product Category** |
| NULL | NULL | NULL | 1215304 | NULL | DameWare |
| **RowVersion** | | | | | |
| | | | | | |

In the multi-activation model, activation is not value of column "Used" set to 1, rather counters and related logic behind license size computation (LicenseUnitSize, ActivationCount, MaxInstallationCount) are employed. If value of ActivationCount reaches MaxInstallationCount value, further activations are blocked.

**Table Registrations**

| **RegID** | **CustomerID** | **AppKey** | **PurchaseDate** | **RegDate** | **Price** |
|---|---|---|---|---|---|
| 2250208 | SW21926486 | 12545 | 41646 | 1/7/2014 | NULL |
| **ComputerName** | **Volume** | **Name** | **Invoice** | **Paid** | **Used** |
| *QA-BRN-VTOM***-***03* | NULL | | 10157516 | YES | 0 |
| **EMail** | **Phone** | **KeyType** | **SerialNumber** | **Key** | **IP** |
| *aa@bb.cc* | | GEN3 | NULL | NULL | NULL |
| **Company** | **Owner** | **Logon** | **Windows** | **ServicePack** | **WinVer** |
| NULL | *Windows User* | *Administrator* | NULL | NULL | NULL |
| **VolumeLabel** | **Release** | **Distributor** | **MACAddress** | **AppID** | **Latest** |
| NULL | NULL | NULL | NULL | 12069 | NULL |
| **Net SuiteLicenseID** | **LastUpdateBy** | **LastUpdate Date** | **Activation Key** | **LicenseBlob** | **ShowRC** |
| 1215304 | LicenseCreation Integration | 1/7/2014 9:49:44 AM | 222D-B3E4-3A55-4951-8E41-75F4-4F50-AC0F | *AgQDR..... 62RnV* | FALSE |
| **Activation Count** | **LicenseGroupId** | **LicenseUnitSize** | **LicenseSize** | **BundleID** | **MaxInstallation Count** |
| *1* | 1215304 | 4 | NULL | NULL | 12 |
| **MachineID** | **RowVersion** | **LicenseNotes** | **BaseAppID** | | |
| *Ap+7d0j..... QXrLoAC* | | NULL | 12067 | | |

Because there are many installations linked to one key, shared information is stored in the "Registrations" table, and installation-related part of information (customer info, Machine ID, Computer name, License Blob, etc.) are stored in the table "Registrations_multiactivations." Additionally, there can be activated different versions of a product (key for higher version can cover lower one). While filling "Registrations_multiactivations" data, there can be copied some information into a master record in the table "Registrations", this may be used mainly for triggering internal synchronization mechanisms between systems working with the licensing server.

**Table Registrations multiactivations**

| **IH PK** | **RegDate** | **ComputerName** | **Name** | **Paid** | **EMail** |
|---|---|---|---|---|---|
| 297696 | 41646.66 | QA-BRN-VTOM-03 | | YES | aa@bb.cc |

| **Phone** | **KeyType** | **SerialNumber** | **Key** | **IP** | **Company** |
|---|---|---|---|---|---|
| | GEN3 | NULL | NULL | NULL | NULL |

| **Windows** | **ServicePack** | **WinVer** | **Release** | **NetSuite LicenseID** | **LastUpdateBy** |
|---|---|---|---|---|---|
| NULL | NULL | NULL | NULL | 1215304 | LicenseCreationIntegratio n |

| **ActivationKey** | **RegID** | **Volume** | **MACAddress** | **AppID** | **LicenseBlob** |
|---|---|---|---|---|---|
| 222D-B3E4-3A55-4951-8E41-75F4-4F50-AC0F | 2250208 | NULL | NULL | 12069 | AgQDRFJTAT....Cg962 RnV |

| **IsActivation** | **ActivationCount** | **MachineID** | **RowVersion** | **BaseAppID** | |
|---|---|---|---|---|---|
| TRUE | 1 | Ap+7d0jaOuL....2QXrL oAC | | 12067 | |

**Table Subscriptions**

| **SubID** | **CustomerID** | **OrderDate** | **ExpireDate** | **Type** | **Active** |
|---|---|---|---|---|---|
| 1162865 | SW21926486 | 41646 | 42011 | DameWare Remote Support Per Seat License (4 to 5 user price) | Y |

| **LastCD** | **EmailFlag** | **Sent** | **Invoice** | **AppID** | **Renewal** |
|---|---|---|---|---|---|
| NULL | 0 | NULL | NULL | 12081 | NULL |

| **StartDate** | **TaxableMaint** | **Deferred Maint** | **Deferred Complete** | **MaintRenew** | **Upgraded** |
|---|---|---|---|---|---|
| 41646 | NULL | NULL | N | FALSE | FALSE |

| **UpgradeDate** | **UpgradeInvoice** | **LicenseID** | **NetsuiteLicense** | **NetsuiteMaintID** | **Product Category** |
|---|---|---|---|---|---|
| NULL | NULL | NULL | 1215304 | NULL | DameWare |

| **RowVersion** | | | | | |
|---|---|---|---|---|---|
| | | | | | |

For deactivation, there may be employed counter mechanisms as mentioned above. However, instead of marking a record as used, there is licensing logic based on computations with counters and limits. In this embodiment, the deactivation process works the opposite way and decreases counters. Thus, the same product license can be moved over many computers provided that, at the time, the number of simultaneously activated licenses does not reach license size (MaxInstallationSize).

**Table Registrations**

| **RegID** | **CustomerID** | **AppKey** | **PurchaseDate** | **RegDate** | **Price** |
|---|---|---|---|---|---|
| 2250208 | SW21926486 | 12545 | 41646 | 1/7/2014 | NULL |

| **Computer** Name | **Volume** | **Name** | **Invoice** | **Paid** | **Used** |
|---|---|---|---|---|---|
| QA-BRN-VTOM-03 | NULL | | 10157516 | YES | 0 |

| **EMail** | **Phone** | **KeyType** | **SerialNumber** | **Key** | **IP** |
|---|---|---|---|---|---|
| aa@bb.cc | | GEN3 | NULL | NULL | NULL |

| **Company** | **Owner** | **Logon** | **Windows** | **ServicePack** | **WinVer** |
|---|---|---|---|---|---|
| NULL | Windows User | Administrator | NULL | NULL | NULL |

| **VolumeLabel** | **Release** | **Distributor** | **MACAddress** | **AppID** | **Latest** |
|---|---|---|---|---|---|
| NULL | NULL | NULL | NULL | 12069 | NULL |

| **NetSuite LicenseID** | **Last UpdateBy** | **LastUpdateDate** | **ActivationKey** | **LicenseBlob** | **ShowRC** |
|---|---|---|---|---|---|
| 1215304 | LicenseCreation Integration | 1/7/2014 9:49:44 AM | 222D-B3E4-3A55-4951-8E41-75F4-4F50-AC0F | NULL | FALSE |

| **ActivationCount** | **License GroupId** | **LicenseUnitSize** | **LicenseSize** | **BundleID** | **MaxInstallation Count** |
|---|---|---|---|---|---|
| 0 | 1215304 | 4 | NULL | NULL | 12 |

| **MachineID** | **RowVersion** | **LicenseNotes** | **BaseAppID** | | |
|---|---|---|---|---|---|
| Ap+7d0ja.... 2QXrLoAC | | NULL | 12067 | | |

**Table Registrations multiactivations**

| **IH_PK** | **RegDate** | **ComputerName** | **Name** | **Paid** | **EMail** |
|---|---|---|---|---|---|
| 297696 | 41646.66 | QA-BRN-VTOM-03 | | YES | aa@bb.cc |

| **Phone** | **KeyType** | **SerialNumber** | **Key** | **IP** | **Company** |
|---|---|---|---|---|---|
| | GEN3 | NULL | NULL | NULL | NULL |

| **Windows** | **ServicePack** | **WinVer** | **Release** | **NetSuite LicenseID** | **LastUpdateBy** |
|---|---|---|---|---|---|
| NULL | NULL | NULL | NULL | 1215304 | LicenseCreation Integration |

| **Activation Key** | **RegID** | **Volume** | **MAC Address** | **AppID** | **LicenseBlob** |
|---|---|---|---|---|---|
| 222D-B3E4-3A55-4951-8E41-75F4-4F50-AC0F | 2250208 | NULL | NULL | 12069 | AgQDRFJT....62RnV |

| **IsActivation** | **Activation Count** | **MachineID** | **Row Version** | **BaseAppID** | |
|---|---|---|---|---|---|
| TRUE | *0* | Ap+7d....QXrLoAC | | 12067 | |

**Table Subscriptions**

| **SubID** | **CustomerID** | **OrderDate** | **ExpireDate** | **Type** | **Active** |
|---|---|---|---|---|---|
| 1162865 | SW21926486 | 41646 | 42011 | DameWare Remote Support Per Seat License (4 to 5 user price) | Y |

| **LastCD** | **EmailFlag** | **Sent** | **Invoice** | **AppID** | **Renewal** |
|---|---|---|---|---|---|
| NULL | 0 | NULL | NULL | 12081 | NULL |

| **StartDate** | **TaxableMaint** | **DeferredMaint** | **DeferredComplete** | **MaintRenew** | **Upgraded** |
|---|---|---|---|---|---|
| 41646 | NULL | NULL | N | FALSE | FALSE |

| **UpgradeDate** | **UpgradeInvoice** | **LicenseID** | **NetsuiteLicense** | **NetsuiteMaintID** | **ProductCategory** |
|---|---|---|---|---|---|
| NULL | NULL | NULL | 1215304 | NULL | DameWare |

| **RowVersion** | | | | | |
|---|---|---|---|---|---|
| | | | | | |

If there is tier upgrade performed upon license in multiactivation model, there is master record in the Registrations table abandoned and the new one is created. However these records are linked by Netsuite License ID thus customer can use any of the the activations keys.

**Table Registrations**

| **RegID** | **CustomerID** | **AppKey** | **PurchaseDate** | **RegDate** | **Price** |
|---|---|---|---|---|---|
| 2250208 | SW21926486 | 12545 | 1/7/2014 | 1/7/2014 | NULL |
| *2250210* | *SW21926486* | *12546* | *1*/*7*/*2014* | *NULL* | *NULL* |

| **ComputerName** | **Volume** | **Name** | **Invoice** | **Paid** | **Used** |
|---|---|---|---|---|---|
| QA-BRN-VTOM-03 | NULL | | 10157516 | *Upgraded* | 0 |
| *NULL* | *NULL* | *NULL* | *10157517* | *YES* | *0* |

| **EMail** | **Phone** | **KeyType** | **SerialNumber** | **Key** | **IP** |
|---|---|---|---|---|---|
| aa@bb.cc | | GEN3 | NULL | NULL | NULL |
| *NULL* | *NULL* | *GEN3* | *NULL* | *NULL* | *NULL* |

| **Company** | **Owner** | **Logon** | **Windows** | **ServicePack** | **WinVer** |
|---|---|---|---|---|---|
| NULL | Windows User | Administrator | NULL | NULL | NULL |
| *NULL* | *NULL* | *NULL* | *NULL* | *NULL* | *NULL* |

| **VolumeLabel** | **Release** | **Distributor** | **MACAddress** | **AppID** | **Latest** |
|---|---|---|---|---|---|
| NULL | NULL | NULL | NULL | 12069 | NULL |
| *NULL* | *NULL* | *NULL* | *NULL* | *12070* | *NULL* |

| **NetSuiteLicenseID** | **LastUpdateBy** | **LastUpdateDate** | **ActivationKey** | **LicenseBlob** | **ShowRC** |
|---|---|---|---|---|---|
| *1215304* | LicenseCreation Integration | 1/7/2014 9:49:44 AM | 222D-B3E4-3A55-4951-8E41-75F4-4F50-AC0F | NULL | FALSE |
| *1215304* | *LicenseCreation Integration* | *1*/*7*/*2014 10:04:44 AM* | *DAFF*-*D956*-*D5B7-41D5-BE42-38F3-A695*-*67F7* | *NULL* | *FALSE* |

| **ActivationCount** | **LicenseGroupId** | **LicenseUnitSize** | **LicenseSize** | **BundleID** | **MaxInstallationCount** |
|---|---|---|---|---|---|
| 0 | 1215304 | 4 | NULL | NULL | 12 |
| *NULL* | *1215306* | 6 | *NULL* | *NULL* | *18* |

| **MachineID** | **RowVersion** | **LicenseNotes** | **BaseAppID** | | |
|---|---|---|---|---|---|
| Ap+7d0jaOu.... 2QXrLoAC | | NULL | 12067 | | |
| *NULL* | | *NULL* | *NULL* | | |

**Table Registrations multiactivations**

| No new record is created yet. | | | | | |
|---|---|---|---|---|---|
| **IH PK** | **RegDate** | **ComputerName** | **Name** | **Paid** | **EMail** |
| 297696 | 41646.66 | QA-BRN-VTOM-03 | | YES | aa@bb.cc |

| **Phone** | **KeyType** | **SerialNumber** | **Key** | **IP** | **Company** |
|---|---|---|---|---|---|
| | GEN3 | NULL | NULL | NULL | NULL |

| **Windows** | **ServicePack** | **WinVer** | **Release** | **NetSuite LicenseID** | **LastUpdateBy** |
|---|---|---|---|---|---|
| NULL | NULL | NULL | NULL | 1215304 | LicenseCreation Integration |

| **ActivationKey** | **RegID** | **Volume** | **MACAddress** | **AppID** | **LicenseBlob** |
|---|---|---|---|---|---|
| 222D-B3E4-3A55-4951-8E41-75F4-4F50-AC0F | 2250208 | NULL | NULL | 12069 | AgQDRFJT..... g962RnV |

| **IsActivation** | **ActivationCount** | **MachineID** | **RowVersion** | **BaseAppID** | |
|---|---|---|---|---|---|
| TRUE | 0 | Ap+7d0jaO.... 2QXrLoAC | | 12067 | |

**Table Subscriptions - for new key**

| Record is dropped and re-created. | | | | | |
|---|---|---|---|---|---|
| **SubID** | **CustomerID** | **OrderDate** | **ExpireDate** | **Type** | **Active** |
| *1162867* | *SW2192648* 6 | *1*/*7*/*2014 12:00:00 AM* | *42011* | *DameWare Remote Support Per Seat License (6 to 9 user price)* | Y |

| **LastCD** | **EmailFlag** | **Sent** | **Invoice** | **AppID** | **Renewal** |
|---|---|---|---|---|---|
| *NULL* | *0* | *NULL* | *NULL* | *12082* | *NULL* |

| **StartDate** | **Taxable Maint** | **Deferred Maint** | **Deferred Complete** | **MaintRenew** | **Upgraded** |
|---|---|---|---|---|---|
| *1*/*7*/*2014 12;00:00 AM* | *NULL* | *NULL* | *N* | *FALSE* | *FALSE* |

| **Upgrade Date** | **Upgrade Invoice** | **LicenseID** | **NetsuiteLicense** | **Netsuite MaintID** | **Product Category** |
|---|---|---|---|---|---|
| *NULL* | *NULL* | *NULL* | *1215304* | *NULL* | *DameWare* |

| **RowVersion** | | | | | |
|---|---|---|---|---|---|
| | | | | | |

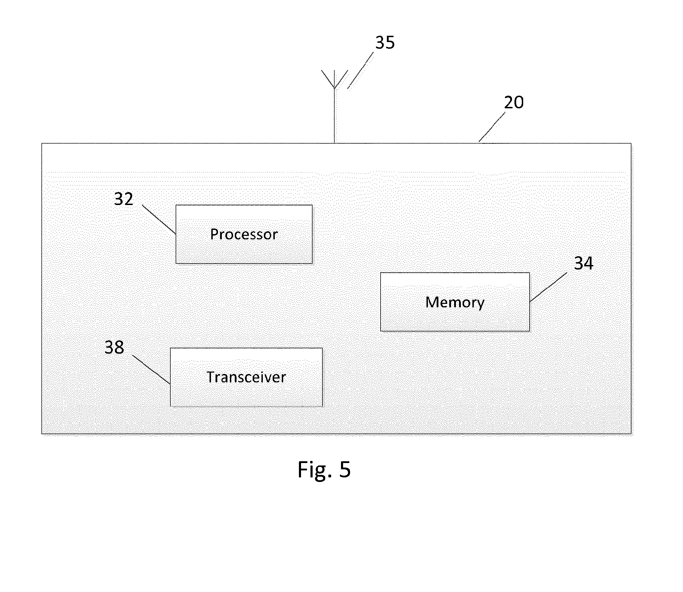

Fig. 5 illustrates an example of an apparatus 20 according to an embodiment. In an embodiment, apparatus 20 may be a node, host, or server in a communications network or serving such a network, such as the licensing server discussed above. It should be noted that one of ordinary skill in the art would understand that apparatus 20 may include components or features not shown in Fig. 5.

As illustrated in Fig. 5, apparatus 20 may include a processor 32 for processing information and executing instructions or operations. Processor 32 may be any type of general or specific purpose processor. While a single processor 32 is shown in Fig. 5, multiple processors may be utilized according to other embodiments. In fact, processor 32 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 20 may further comprise or be coupled to a memory 34 (internal or external), which may be coupled to processor 32, for storing information and instructions that may be executed by processor 32. Memory 34 may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory 34 may be comprised of any combination of random access memory (RAM), read only memory (ROM), static storage such as a magnetic or optical disk, or any other type of non-transitory machine or computer readable media. The instructions stored in memory 34 may include program instructions or computer program code that, when executed by processor 32, enable the apparatus 20 to perform tasks as described herein.

Apparatus 20 may also comprise or be coupled to one or more antennas 35 for transmitting and receiving information and/or data to and from apparatus 20. Alternatively, apparatus 20 may include a communication interface or ports for transmitting and receiving information over a network. Apparatus 20 may further comprise or be coupled to a transceiver 38 configured to transmit and receive information. The transceiver may be an external device, such as a remote radio head. For instance, transceiver 38 may be configured to modulate information on to a carrier waveform for transmission by the antenna(s) 35 and demodulate information received via the antenna(s) 35 for further processing by other elements of apparatus 20. In other embodiments, transceiver 38 may be capable of transmitting and receiving signals or data directly.

Processor 32 may perform functions associated with the operation of apparatus 20 including, without limitation, precoding of antenna gain/phase parameters, encoding and decoding of individual bits forming a communication message, formatting of information, and overall control of the apparatus 20, including processes related to management of communication resources.

In an embodiment, memory 34 stores software modules that provide functionality when executed by processor 32. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

As mentioned above, according to one embodiment, apparatus 20 may be a server, node or host or base station in a communications network or serving such a network, such as a licensing server. In this embodiment, apparatus 20 may be controlled by memory 34 and processor 32 to create a registration record in a database upon activation of a license for a product. The registration record may include an activation key for the license. According to one embodiment, apparatus 20 may be further controlled by memory 34 and processor 32 to generate a new registration record comprising a new activation key when a change to the license occurs, to generate a globally unique identifier for linking the registration record with the new registration record, and to store the linked registration records in the database. In an embodiment, the change to the license comprises at least one of a product upgrade or a maintenance renewal.

In an embodiment, apparatus 20 may be further controlled by memory 34 and processor 32 to receive the activation key for the license from a user seeking to activate a feature of the product, and to search the linked registration records for the new activation key using the received activation key. When the new activation key is found, apparatus 20 may be further controlled by memory 34 and processor 32 to use the new activation key to activate the feature of the product.

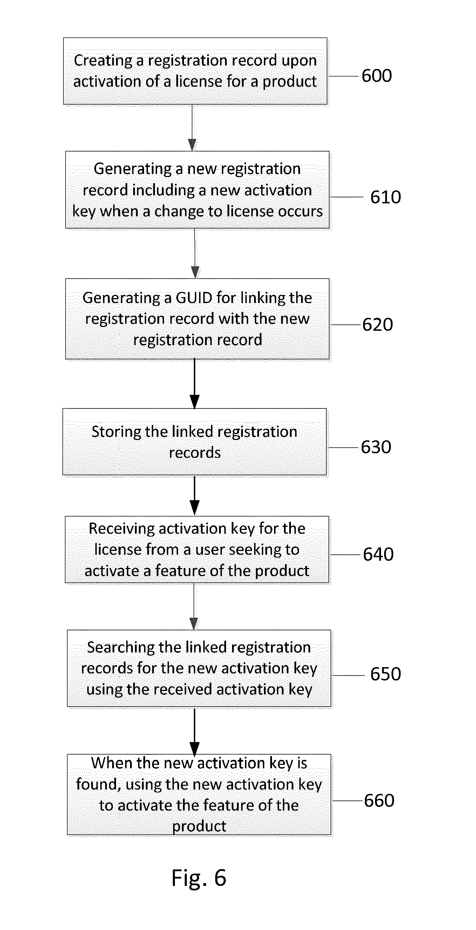

Fig. 6 illustrates an example flow diagram of a method, according to one embodiment. In an embodiment, the method of Fig. 6 may be performed by a server, such as the licensing server discussed above. According to one embodiment, the method may include, at 600, creating a registration record in a database upon activation of a license for a product. The registration record may include at least an activation key for the license. The method may then include, at 610, generating a new registration record comprising a new activation key when a change to the license occurs. The method may also include, at 620, generating a globally unique identifier (GUID) for linking the registration record with the new registration record. At 630, the method may further include storing the linked registration records in the database.

In an embodiment, the method of Fig. 6 may also include, at 640, receiving the activation key for the license from a user seeking to activate a feature of the product, and, at 650, searching the linked registration records for the new activation key using the received activation key. When the new activation key is found in the linked registration records, the method may include, at 660, using the new activation key to activate the feature of the product.

In some embodiments, the functionality of any of the methods described herein, such as that of Fig. 6, may be implemented by software and/or computer program code stored in memory or other computer readable or tangible media, and executed by a processor. In other embodiments, the functionality may be performed by hardware, for example through the use of an application specific integrated circuit (ASIC), a programmable gate array (PGA), a field programmable gate array (FPGA), or any other combination of hardware and software.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention. In order to determine the metes and bounds of the invention, therefore, reference should be made to the appended claims.

Systems, methods, apparatuses, and computer program products for a reusable license activation key are provided. One method includes creating, by a server, a registration record in a database upon activation of a license for a product, the registration record comprising an activation key for the license. The method may further include generating a new registration record comprising a new activation key when a change to the license occurs, generating a globally unique identifier for linking the registration record with the new registration record, and storing the linked registration records in the database.

## Claims

1. A method, comprising:
creating, by a server, a registration record in a database upon activation of a license for a product, the registration record comprising an activation key for the license;
generating a new registration record comprising a new activation key when a change to the license occurs;
generating a globally unique identifier for linking the registration record with the new registration record; and
storing the linked registration records in the database.

2. The method according to claim 1, wherein the change to the license comprises at least one of a product upgrade or a maintenance renewal.

3. The method according to claim 1, further comprising:
receiving the activation key for the license from a user seeking to activate a feature of the product; and
searching the linked registration records for the new activation key using the received activation key.

4. The method according to claim 3, wherein, when the new activation key is found, using the new activation key to activate the feature of the product.

5. An apparatus, comprising:
at least one processor; and
at least one memory including computer program code,
the at least one memory and computer program code configured, with the at least one processor, to cause the apparatus at least to
create a registration record in a database upon activation of a license for a product, the registration record comprising an activation key for the license;
generate a new registration record comprising a new activation key when a change to the license occurs;
generate a globally unique identifier for linking the registration record with the new registration record; and
store the linked registration records in the database.

6. The apparatus according to claim 5, wherein the change to the license comprises at least one of a product upgrade or a maintenance renewal.

7. The apparatus according to claim 5, wherein the at least one memory and the computer program code are further configured, with the at least one processor, to cause the apparatus at least to:
receive the activation key for the license from a user seeking to activate a feature of the product; and
search the linked registration records for the new activation key using the received activation key.

8. The apparatus according to claim 7, when the new activation key is found, the at least one memory and the computer program code are further configured, with the at least one processor, to cause the apparatus at least to use the new activation key to activate the feature of the product.

9. The apparatus according to claim 5, wherein the apparatus comprises a licensing server.

10. A computer program, embodied on a non-transitory computer readable medium, the computer program configured to control a processor to perform a process, comprising: creating, by a server, a registration record in a database upon activation of a license for a product, the registration record comprising an activation key for the license;
generating a new registration record comprising a new activation key when a change to the license occurs;
generating a globally unique identifier for linking the registration record with the new registration record; and
storing the linked registration records in the database.

11. The computer program according to claim 10, wherein the change to the license comprises at least one of a product upgrade or a maintenance renewal.

12. The computer program according to claim 10, further comprising:
receiving the activation key for the license from a user seeking to activate a feature of the product; and
searching the linked registration records for the new activation key using the received activation key.

13. The computer program according to claim 12, wherein, when the new activation key is found, using the new activation key to activate the feature of the product.
